# EUROPÄISCHE PATENTSCHRIFT

(11) **EP 1 522 213 B1**
(45) Veröffentlichungstag und Bekanntmachung des Hinweises auf die Patenterteilung: **21.05.2008**
(21) Anmeldenummer: 03405720.8
(22) Anmeldetag: 07.10.2003
(51) Int. Cl.: A01B 59/06, A01D 78/10

(54) **Einrichtung für den Anbau einer landwirtschaftlichen Maschine**
Device for the attachment of an agricultural machine
Dispositif pour la fixation d'une machine agricole

(43) Veröffentlichungstag der Anmeldung: 13.04.2005
(73) Patentinhaber: Kurmann Technik AG, 6017 Ruswil (CH)
(72) Erfinder: Kurmann, Otto, 6017 Rüediswil-Ruswil (CH)
(74) Vertreter: Fenner, Werner

(56) Entgegenhaltungen:
- EP-A- 0 346 701
- EP-A- 0 370 304
- EP-A- 0 512 602
- GB-A- 2 023 399
- US-A- 5 538 086

## Beschreibung

Die Erfindung betrifft eine Einrichtung für den Anbau einer landwirtschaftlichen Maschine oder eines Gerätes an einen heck- oder frontseitig eines Zugfahrzeuges befestigten Anbaubock, an dem die Maschine mittels einer Anhängedeichsel lösbar befestigt und zum wahlweisen Fortbewegen in einer Transport- resp. Ausserbetriebsstellung, in der die Maschine durch eine Verriegelungsvorrichtung seitlich unbeweglich und vom Boden angehoben, oder in einer Arbeitsstellung, in der die Maschine in der Verriegelungsvorrichtung gelöst und seitlich begrenzt schwenkbar auf dem Boden fahrbar ist, und mit einer Anbaubock und Gestell der Maschine wenigstens einseitig verbindenden, seitliche Bewegungen der Maschine dämpfenden Stabilisierungsvorrichtung.

Einrichtungen der eingangs genannten Art sind in landwirtschaftlichen und kommunalen Betrieben bekannt und werden dort u.a. in der Futterwerbung und in der Pflege kommunaler Einrichtungen und Anlagen eingesetzt.

Der zum Anbau einer Maschine an einer Zugmaschine oder einem Traktor geeignete Anbaubock, in Fachkreisen auch Schwenkbock bezeichnet, ist üblicherweise heckseitig an einer Dreipunktanbauvorrichtung befestigt, die einen Oberlenker und zwei Unterlenker aufweist. Der Oberlenker dient dazu, eine Maschine oder ein Gerät um eine Querachse in der richtigen Betriebslage zu halten und die Unterlenker dienen der Aufnahme einer Maschine an einem Zugfahrzeug resp. Traktor.

Der Anbaubock, der mit der Maschine lösbar gekoppelt ist, weist eine Ver- und Entriegelungseinrichtung auf, welche die Maschine beim Transport zu oder von dem Arbeitsort in einer vom Boden abgehobenen Lage hält, in der sie unbeweglich mit dem Zugfahrzeug verbunden ist. Die Entriegelung der Maschine erfolgt beim Abstellen der Maschine in die Arbeitsstellung auf dem Boden, in der sie seitlich begrenzte Schwenkbewegungen ausüben kann. Das seitliche Schwenken um einen Anlenkpunkt beträgt insgesamt etwa 50°.
Handelt es sich um Heuwerbungsmaschinen wie beispielsweise Kreiselzettwender, auch Kreiselheuer genannt, zum Zetten, oder Kreiselschwader zur Schwadbildung, so werden diese bei der Recharbeit auf Rollen resp. Rädern auf dem Boden fortbewegt. Durch ein Fahrgestell an diesen Maschinen kann eine gute Arbeit verrichtet werden, da sich die Rollen der Geländeoberfläche genau anpassen und die Rechwerkzeuge dadurch in die richtige Lage versetzt werden. Wird die Maschine vom Boden abgehoben, wird sie durch den Anbaubock in eine Transportlage versetzt, so dass sie in einer Arretierstellung verriegelt ist. Diese Verriegelung erfolgt beispielsweise bei einem Anbaubock der Alois Pöttinger Maschinenfabrik GmbH durch eine mechanische Ver- und Entriegelungsvorrichtung, bei der beim Anheben der Maschine ein an der Deichsel befestigter Herzbolzen über eine herzförmige Steuerkulisse selbsttätig in eine Ausnehmung verlagert wird, so dass die Maschine in einer Ausserbetriebslage steht, in der sie unbeweglich in der Längsachse des Zugfahrzeuges verharrt. Dokument EP-346701-A1 offenbart eine solche Maschine.
Befindet sich die Maschine auf weitgehend ebenem Gelände, lässt sie sich mit wenig Kraftaufwand in die Ausserbetriebslage anheben oder in die Betriebslage absenken.
Wird die Maschine jedoch in den Schichtenlinien eines Hanges fortbewegt oder während dem Wenden des Zugfahrzeuges angehoben und wieder abgesetzt, entstehen durch das Eigengewicht der Maschine und die Hangschräglage hohe Beschleunigungskräfte, die die Maschine in eine schleuderähnliche Bewegung versetzen, so dass die Ver- und Entriegelungsvorrichtung sowie weitere Einrichtungsteile beschädigt werden.
Diesem Umstand ist Pöttinger durch Dämpfungsstreben begegnet, die beidseits der Längsachse des Zugfahrzeuges den Anbaubock und das Maschinengestell verbinden. Die Dämpfungsstreben bestehen aus einem Rohr, in das eine Druckfeder eingebaut ist, die auf eine Stange einwirkt, so dass die Maschine in der Längsachse stehend, von beiden Dämpfungsstreben etwa ausgeglichen gehalten wird. Befindet sich die Maschine in einer Hanglage und ist bzw. wird sie vom Boden abgehoben, verändert sie ihre Lage plötzlich und schwenkt mit grosser Kraft hangabwärts, wo sie von der Druckfeder der einen Dämpfungsstrebe aufgefangen werden soll. Die so zusammengepresst Druckfeder der betroffenen Dämpfungsstrebe stösst mit gespeicherter Energie die Maschine zurück. Dieser Vorgang wiederholt sich mehrmals, sodass die Maschine ihre Ausserbetriebsstellung resp. Verriegelungsstellung vorerst nicht erreichen kann.
Grund ist die unzureichende Dämpfungswirkung der Druckfedern, die nicht mit den notwendigen Eigenschaften für eine ausgeglichene Bewegungsdämpfung zu sorgen vermag.
Die vorveröffentlichte EP 0512602 A1 vermittelt eine Mähmaschine, die einen durch eine Kupplungsvorrichtung an der Heckseite eines Traktors befestigten Tragbalken für quer zur Fortbewegungsrichtung nebeinander angeordnete, paarweise gegenläufig angetriebene Mährotoren aufweist, wobei sich der Tragbalken in der Arbeitsstellung der Mähmaschine ausgeschwenkt nach der Seite erstreckt und in der Ausserbetriebsstellung zurückgeschwenkt hinter dem Traktor befindet.

Aufgabe der vorliegenden Erfindung ist es, eine Einrichtung der eingangs genannten Art zu schaffen, mit der die oben erwähnten Nachteile behoben werden.

Erfindungsgemäss wird diese Aufgabe dadurch gelöst, dass Anbaubock und Maschinengestell durch eine Stabilisierungsvorrichtung wenigstens einseitig der Deichsel verbunden sind, wobei die Stabilisierungsvorrichtung aus einem Kolben und einem Zylindergehäuse einer flüssig oder gasförmig beaufschlagbaren Kolben-Zylinder-Einheit besteht, und wobei die durch den Kolben der Kolben-Zylinder-Einheit gebildeten Kammern des Zylindergehäuses durch eine Drosselleitung verbunden sind.

Dadurch können zur Ausbildung des Erfindungsgegenstandes sowohl auf einer Seite wie auch auf beiden Seiten der Deichsel einfach- oder doppelt wirkend beaufschlagbare Kolben-Zylinder-Einheiten verwendet werden.

Bei einer wenigstens einseitig der Deichsel angeordneten erfindungsgemässen Einrichtung kann das Zylindergehäuse zwei hintereinander gebildete Kammern aufweisen, die von einem die Kammern durchsetzenden, einer Kolbenstange verbundenen Kolben getrennt sind.

Eine solche Ausführungsform kann als Drosselleitung eine den Kolben innerhalb des Zylindergehäuses durchsetzende, die Kammern verbindende Bohrung aufweisen, die sich als einfach und kompakt erweist.

Alternativ können anstelle einer inneren Drosselleitung die Kammern durch eine ausserhalb des Zylindergehäuses angeordnete Drosselleitung verbunden sein.

Eine solche Ausführungsform kann auch eine verstellbare Drossel in einer Verbindungsleitung aufweisen, deren Wirkung auf das Maschinengewicht einstellbar ist.

Es ist vorteilhaft, wenn die miteinander verbundenen Kammern bei jeweils maximalem Kolbenhub etwa inhaltsgleich sind, sodass das aus einer der verbundenen Kammern verdrängte Medium (Flüssigkeit oder Gas) auch die andere Kammer weitgehend vollständig füllt. Eine gefüllte Drosselleitung zwischen den Kammern sorgt für ein spielfreies System resp. das System weist ein Arbeitsmedium nach dem Inhalt einer Kammer plus der diese verbindenden Drosselleitung auf.

Bei einer alternativen Ausführungsform ist beidseits der Deichsel jeweils eine Kolben-Zylinder-Einheit mit Anbaubock und Maschinengestell gekoppelt und die durch Kolben und Zylindergehäuse jeder Kolben-Zylinder-Einheit gebildeten Kammem sind durch eine Drosselleitung verbunden.

Selbstverständlich könnte der/im Bodenbereich des Zylindergehäuses eine an die Verbindungsleitung angeschlossene Bohrung als Drossel angeordnet sein.

Eine weitere Ausführungsform zeichnet sich dadurch aus, dass die Zylindergehäuse jeweils zwei durch einen Kolben getrennte Kammern aufweisen, die jeweils mit einer inhaltsgleichen Kammer des anderen Zylindergehäuses durch eine Drosselleitung verbunden sind.

Anschliessend wird unter Bezugnahme auf die Zeichnung, auf die bezüglich aller in der Beschreibung nicht näher erwähnten Einzelheiten verwiesen wird, anhand von Ausführungsbeispielen der erfindungsgemässen Einrichtung erörtert. In der Zeichnung zeigen:
- Fig.1: eine Draufsicht auf eine Ausführung der erfindungsgemässen Einrichtung,
- Fig. 2: eine Draufsicht auf eine weitere Ausführungsform der erfindungsgemässen Einrichtung,
- Fig. 3: eine Draufsicht auf eine alternative Ausführung der erfindungsgemässen Einrichtung und
- Fig. 4: eine Draufsicht auf eine mögliche Ausführung der erfindungsgemässen Einrichtung.

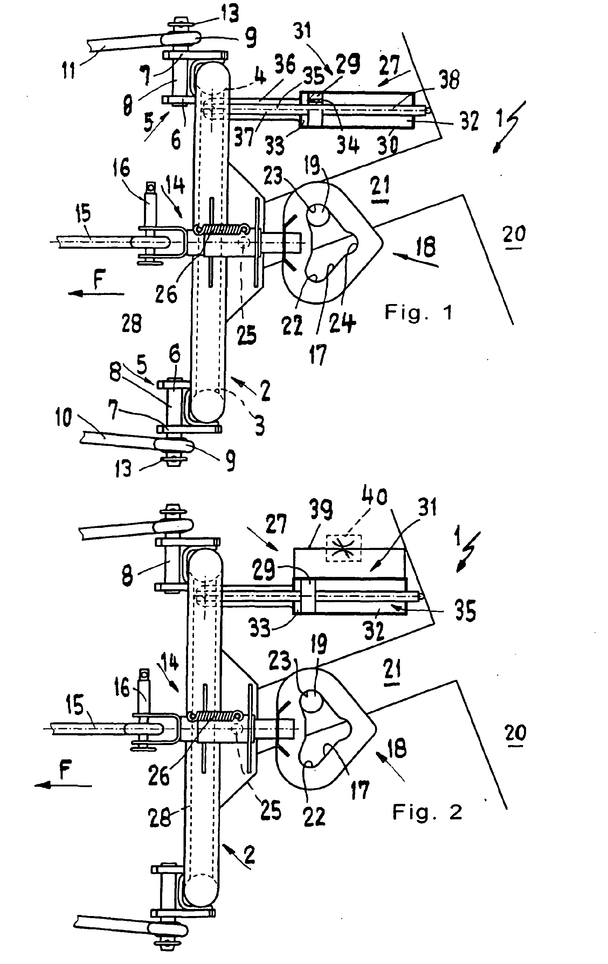

Die Fig. 1 und 2 zeigen eine Einrichtung 1 für den Anbau einer landwirtschaftlichen Maschine 20 oder eines für den kommunalen Einsatz anwendbaren Gerätes an der Heck- und/oder Frontseite eines Zugfahrzeuges (nicht dargestellt), beispielsweise eines an einem Traktor befestigten Anbaubocks 2. Letzterer weist zum Beispiel ein bügelförmiges Joch auf, das an den Enden der nach unten ragenden Schenkel 3, 4 durch jeweils einen Lagerbock 5 ausgebildet ist. Der zwei Laschen 6, 7 aufweisende Lagerbock 5 wird von einem Steckbolzen 8 durchsetzt, der wiederum einen Gelenkkopf 9 an einem Unterlenker 10, 11 einer Dreipunktanhängevorrichtung 12 (nicht vollständig gezeigt) durchdringt und durch einen Sicherungsstift 13 arretiert ist.
An dem gebogenen Jochabschnitt besitzt der Anbaubock 2 eine Verbindungsvorrichtung 14, durch welche die Maschine 20 mit einem Oberlenker 15 der an dem Zugfahrzeug befestigten Dreipunktanhängevorrichtung 12 durch einen steckbaren Dorn 16 gekoppelt ist.
Gegenüberliegend von der Verbindungsvorrichtung 14 ist an dem Anbaubock 2 eine Führungskulisse 17 einer Verriegelungsvorrichtung 18 befestigt, in die ein maschinenseitig resp. ein an einer Anhängedeichsel 21 befestigter Verriegelungsbolzen 19 der Verriegelungsvorrichtung 18 eingreift. Die in den Figuren vergrössert dargestellte Führungskulisse 17 ist etwas herzförmig ausgestaltet, sodass der Verriegelungsbolzen 19 innerhalb der Führungskulisse 17 sich nach zwei seitlichen Anschlägen 22, 23 und einer mittleren, entgegengesetzt zur Fortbewegungsrichtung F versetzten Rast 24 bewegen kann.
Befindet sich die Maschine 20 in fahrbarem Zustand auf dem Boden, so kann sie beim Fahren der Distanz zwischen den seitlichen Anschlägen 22, 23 entsprechend nach beiden Seiten von der Längsmittelachse ausschwenken, wobei ein absoluter Schwenkwinkel von etwa 40 bis 50° üblich ist.
Wird die Maschine 20 zum Transport resp. zur Ausserbetriebsstellung durch die Dreipunktanhängevorrichtung 12 vom Boden abgehoben, bewegt sich der an der Anhängedeichsel 21 befestigte Verriegelungsbolzen 19 aufgrund des Gewichts der angehobenen Maschine 20 in die mittig oder symmetrisch angeordnete Rast 24.

Die Maschine 20 ist durch die Anhängedeichsel 21 mit dem Anbaubock 2 mittels Stecknagel 25 um eine etwa senkrechte Achse schwenkbar verbunden, wobei die freie Schwenkbarkeit der Maschine 20 in deren angehobenem Zustand dann nicht mehr besteht. Die in den Fig. 1 bis 3 dargestellte Feder 26 ist für das Entriegeln des Anbaubocks 2 bestimmt, wenn der Oberlenker 15 als Kette ausgebildet ist und die Maschine 20 beispielsweise ein vorderes Stützrad (nicht ersichtlich) aufweist. Die während dem Betrieb der Maschine 20 beim Absenkenken und Anheben, inbesondere bei Fahrten in Hanglagen und beim Wenden entstehenden Kräfte durch seitliche Schwenkbewegungen der Maschine 20 werden durch eine Stabilisierungsvorrichtung 27 gedämpft. Letztere ist zwischen Anbaubock 2 und Maschine 20 resp. deren Gestell angeordnet bzw. mit diesen auf wenigstens einer Seite der Anhängedeichsel 21 gelenkig verbunden, sodass seitliche Schwenkbewegungen und Bewegungen der Maschine aufgrund von Geländeunebenheiten kompensiert werden können.
Vorliegend ist die Stabilisierungsvorrichtung 27 einerseits mit dem dem Anbaubock 2 zugewandten Ende an einer die Schenkel 3, 4 des Anbaubocks 2 verbindenden Querstrebe 28 resp. jeweils einer zwischen den Schenkeln 3, 4, von diesen nach innen abstehenden Konsole (nicht ersichtlich) oder dgl. und andererseits an einem Support (nicht gezeigt) des Gestells der Maschine 20 angelenkt.
Fig. 1 zeigt eine Ausführung einer Stabilisierungsvorrichtung 27 auf der in Fortbewegungsrichtung F der Maschine 20 rechten Seite der Anhängedeichsel 21, und die Maschine 20 in Fahrstellung sowie seitlich nach rechts verschwenkt, durch Kurvenfahrt und/oder in einer Hanglage. Der Verriegelungsbolzen 19 befindet sich dabei am rechten Anschlag 23 der stationären Führungskulisse 17 der Verriegelungsvorrichtung 18 resp. an der rechten Schwenkgrenze.
Die Stabilisierungsvorrichtung 21 besteht aus einem Kolben 29 und einem diesen umgebenden Zylindergehäuse 30 einer flüssig oder gasförmig beaufschlagbaren Kolben-Zylinder-Einheit 31. Kolben 29 und Zylindergehäuse 30 bilden zwei Kammern 32, 33, die hintereinander angeordnet und durch eine als Drosselleitung 34 ausgebildete Bohrung im Kolben 29 verbunden sind. Der Durchmesser der Bohrung richtet sich nach dem Gewicht einer Maschine 20, so dass die Flüssigkeit oder das Gas aus der einen Kammer 32, 33 in die andere Kammer 33, 32 etwa in einer Menge durchströmen kann, die zur gewünschten Dämpfung der seitlichen Bewegungen der Maschine 20, beispielsweise beim Anheben aus der Betriebs- in die Transport- resp. Ausserbetriebsstellung führt. Das Zylindergehäuse 30 ist vorteilhaft vollständig mit dem durch den Kolben 29 zu verdrängenden Medium gefüllt, so dass in den Kammern 32, 33 kein Hohlraum (Spiel) entsteht bzw. entstehen kann.
Hierzu ist der Kolben 29 an einer Kolbenstange 35 befestigt, die jeweils beide Kammern 32, 33 in Hubrichtung durchsetzt, sodass die Kammern 32, 33 in jeder Kolbenstellung stets mit dem Medium gefüllt sind. Das Zylindergehäuse 30 ist bei der in Fig. 1 gezeigten Ausführung durch eine Lasche 36 an der Querstrebe 28 des Anbaubocks 2 angelenkt. Die Stabilisierungsvorrichtung 27 könnte auch um 180° gedreht angeordnet sein, so dass das Zylindergehäuse 30 an der Maschine 20 angelenkt ist.
Der Kolben 29 ist im Zylindergehäuse 30 durch die das Zylindergehäuse 30 in Hubrichtung durchsetzende Kolbenstange 35 geführt, wobei Kolbenstangenabschnitte 37, 38 in jeder Stellung des Kolbens 29 die Kammern vollständig durchsetzen und der Kolben 29 die Kammern 32, 33 trennt.
Gemäss Fig. 2 ist anstelle einer inneren, den Kolben 29 durchsetzenden Drosselleitung 34 eine ausserhalb des Zylindergehäuses 30 angeordnete, die Kammern 32, 33 verbindende Drosselleitung 39 vorgesehen. Fig. 2 veranschaulicht zusätzlich die Möglichkeit, in einer sich dahingehend weiter von Fig. 1 unterscheidenden Ausführung die Drosselleitung 39 mit einer einstell- und verstellbaren Drossel 40 zu versehen, sodass die Durchflussmenge resp. die Dämpfung der Bewegungen eingestellt werden kann.
Bei den Ausführungen nach den Fig. 1 und 2 können beidseits der Anhängedeichsel 21 Stabilisierungsvorrichtungen 27 befestigt sein.

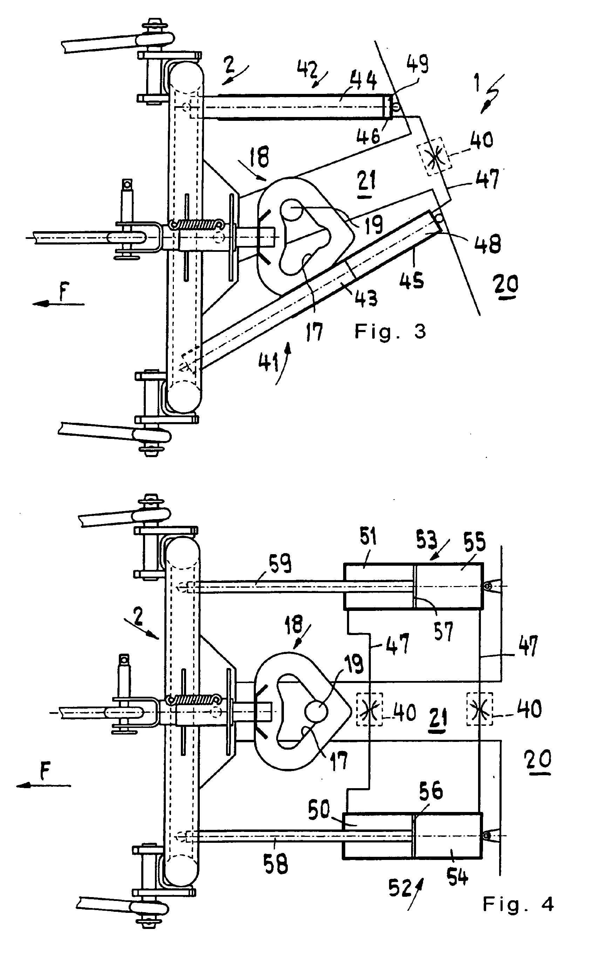

Es ist nicht zwingend erforderlich, dass die Stabilisierungsvorrichtungen 27 bei von dem Boden angehobener, auf die Längsmittelachse verteilter Maschine 20 in Fortbewegungsrichtung F sich erstrecken.
Es muss auch nicht sein, dass zwei Stabilisierungsvorrichtungen 27 die gleiche Länge resp. Betriebslänge aufweisen, zumal mit dem Anbaubock verbundene Maschinen auch in einer zur Querrichtung schrägen Stellung eingesetzt und/oder transportiert werden. Dies gilt auch für Ausführungen der Einrichtung 1 nach den Fig. 3 und 4.

Fig. 3 stellt eine Ausführung der Einrichtung 1 mit zwei als Stabilisierungsvorrichtung 27 ausgebildeten, zusammenwirkenden und auf jeder Seite der Anhängedeichsel 21 angeordneten Kolben-Zylinder-Einheiten 41, 42 dar, bei denen der Kolben 43, 44 jeweils von einer Seite von dem flüssigen oder gasförmigen Medium beaufschlagbar ist. Ein Zylindergehäuse 45, 46 ist mit dem Maschinengestell resp. der Maschine 20 seitlich der Anhängedeichsel 21 gelenkig gekoppelt, wogegen der Kolben 43, 44, auch als Plunger bekannt, jeweils an dem rückwärtigen Ende an dem Anbaubock 2 und der Kolben 43, 44 mit der Maschine 20 verbunden ist. Auch hier könnte das Zylindergehäuse 45, 46 mit dem Anbaubock 2 und der Kolben 43, 44 mit der Maschine 20 gekoppelt sein.
Eine Drosselleitung 47 verbindet die durch Kolben 43, 44 und Zylindergehäuse 45, 46 gebildeten Kammern 48, 49, die in der Transportrichtung F der Maschine 20 und bei ausgeschwenkter Maschine 20 jeweils etwa den gleichen Inhalt aufweisen. Die Füllmenge der Flüssigkeit oder des Gases beträgt auch hier etwa das maximale Inhaltsvolumen einer Kammer 48, 49 sowie der Drosselleitung 47. Auch diese Ausführungsform gestattet den Einbau einer verstellbaren Drossel 40 in der Drosselleitung 47.
Und sind die Inhalte der zum Austausch des Mediums einander zugeordneten Kammern nicht gleich, dann kann die inhaltskleinere Kammer zur Aufnahme des Ueberschusses durch ein Druckgefäss (nicht dargestellt) ergänzt werden.

Fig. 4 vermittelt eine Ausführung der Einrichtung 1, bei der ein Austausch der Flüssigkeit oder des Gases über eine Drosselleitung zwischen zwei jeweils gleich grossen Kammern 50, 51 resp. 54, 55 zweier sich an der Anhängedeichsel 21 gegenüberliegender Kolben-Zylinder-Einheiten 52, 53. Hierbei ist der Kolben 56, 57 am Ende einer Kolbenstange 58, 59 befestigt, die mit dem Anbaubock 2 oder der Maschine 20 verbunden ist. Gemäss Darstellung befindet sich die Maschine 20 in der angehobenen Transportstellung. Bei dieser Ausführung ist es möglich, die Kolben 56, 57 von einer oder beiden Seiten mit dem zur Verdrängung benutzten Medium zu beaufschlagen.

## Patentansprüche

1. Einrichtung (1) für den Anbau einer landwirtschaftlichen Maschine (20) oder eines Gerätes an einen heck- oder frontseitig eines Zugfahrzeuges befestigten Anbaubock (2), an dem die Maschine (20) mittels einer Anhängedeichsel (21) lösbar befestigt und zum wahlweisen Fortbewegen in einer Transport- resp. Ausserbetriebsstellung, in der die Maschine (20) durch eine Verriegelungsvorrichtung (18) seitlich unbeweglich und vom Boden angehoben, oder in einer Arbeitsstellung, in der die Maschine (20) in der Verriegelungsvorrichtung (18) gelöst und seitlich begrenzt schwenkbar auf dem Boden fahrbar ist, und mit einer Anbaubock (2) und Gestell der Maschine wenigstens einseitig verbindenden, seitliche Bewegungen der Maschine (20) dämpfenden Stabilisierungsvorrichtung (27), **dadurch gekennzeichnet, dass** Anbaubock (2) und Maschinengestell durch eine Stabilisierungsvorrichtung (27) verbunden sind, die aus einem Kolben (29) und einem Zylindergehäuse (30) einer flüssig oder gasförmig beaufschlagbaren Kolben-Zylinder-Einheit (31) besteht, wobei die durch den Kolben (29) der Kolben-Zylinder-Einheit (31) gebildeten Kammern (32, 33, 48, 49, 50, 51) des Zylindergehäuses (30, 45, 46) durch eine Drosselleitung (34, 39, 39, 47) verbunden sind.

2. Einrichtung nach Anspruch 1, **dadurch gekennzeichnet, dass** ein Zylindergehäuse (30) zwei hintereinander angeordnete Kammern (32, 33) aufweist, die von einem die Kammern (32, 33) durchsetzenden, mit einer Kolbenstange (35) verbundenen Kolben (29) getrennt sind.

3. Einrichtung nach Anspruch 2, **dadurch gekennzeichnet, dass** der Kolben (29) eine die Kammern (32, 33) innerhalb des Zylindergehäuses (30) verbindende Bohrung als Drosselleitung (34) aufweist.

4. Einrichtung nach Anspruch 1 oder 2, **dadurch gekennzeichnet, dass** die Kammern (32, 33) durch eine ausserhalb des Zylindergehäuses (30) angeordnete Drosselleitung (39) verbunden sind.

5. Einrichtung nach Anspruch 4, **dadurch gekennzeichnet, dass** die Drosselleitung (39) eine verstellbare Drossel (40) aufweist.

6. Einrichtung nach einem der Ansprüche 1 bis 5, **dadurch gekennzeichnet, dass** die verbundenen Kammern (32, 33) bei maximalem Kolbenhub etwa den gleichen Inhalt aufweisen.

7. Einrichtung nach einem der Ansprüche 1 bis 6, **dadurch gekennzeichnet, dass** beidseits der Anhängedeichsel (21) jeweils eine Kolben-Zylinder-Einheit (31) endseitig mit Anbaubock (2) und Maschinengestell gekoppelt ist und dass die durch Kolben (29) und Zylindergehäuse (30) einer Kolben-Zylinder-Einheit (31) gebildeten Kammern (47, 48) durch eine Drosselleitung (47) verbunden sind.

8. Einrichtung nach Anspruch 7, **dadurch gekennzeichnet, dass** die Zylindergehäuse (45, 46) jeweils zwei durch einen Kolben (56, 57) getrennte Kammern (50, 54; 51, 55) aufweisen, von denen wenigstens eine mit der inhaltsgleichen Kammer (50, 54; 51, 55) des anderen Zylindergehäuses (45, 46) durch eine Drosselleitung (47) verbunden ist.

9. Einrichtung nach Anspruch 8, **dadurch gekennzeichnet, dass** jeweils zwei inhaltsgleiche Kammern (50, 51; 51, 54) zweier Kolben-Zylinder-Einheiten (52, 53) durch eine Drosselleitung (47) verbunden sind.

## Claims

1. Device (1) for mounting an agricultural machine (20) or an implement on a mounting support (2) which is fastened to the front or rear of a towing vehicle and to which the machine (20) is releasably fastened by means of a drawbar (21), and for travel as required in a transport position or idle position in which the machine (20) is laterally fixed and raised from the ground by a locking device (18) or in a working position in which the machine (20) is released in the locking device (18) and can move along the ground in such a manner that it can pivot laterally to a limited extent, and comprising a stabilising device (27) connecting the mounting support (2) and the frame of the machine at least on one side and damping lateral movements of the machine (20), **characterised in that** the mounting support (2) and the machine frame are connected together by means of a stabilising device (27) consisting of a piston (29) and a cylinder housing (30) of a piston/cylinder unit (31) which can be supplied with liquid or gas, the chambers (32, 33, 48, 49, 50, 51) of the cylinder housing (30, 45, 46) formed by the piston (29) of the piston/cylinder unit (31) being connected together by means of a throttling line (34, 39, 39, 47).

2. Device according to claim 1, **characterised in that** a cylinder housing (30) has two chambers (32, 33) arranged one behind the other and separated by a piston (29) traversing the chambers (32, 33) and connected to a piston rod (35).

3. Device according to claim 2, **characterised in that** the piston (29) has a bore connecting the chambers (32, 33) within the cylinder housing (30) serving as the throttling line (34).

4. Device according to claim 1 or claim 2, **characterised in that** the chambers (32, 33) are connected together by means of a throttling line (39) arranged outside the cylinder housing (30).

5. Device according to claim 4, **characterised in that** the throttling line (39) has an adjustable throttling element (40).

6. Device according to one of claims 1 to 5, **characterised in that** the connected chambers (32, 33) have approximately the same capacity at the maximum piston stroke.

7. Device according to one of claims 1 to 6, **characterised in that** respective piston/cylinder units (31) are coupled at their ends to the mounting support (2) and the machine frame on either side of the drawbar (21) and that the chambers (47, 48) formed by the piston (29) and the cylinder housing (30) of a piston/cylinder unit (31) are connected together by means of a throttling line (47).

8. Device according to claim 7, **characterised in that** the cylinder housings (45, 46) each have two chambers (50, 54; 51, 55) separated by a piston (56, 57), at least one of which is connected to the chamber (50, 54; 51, 55) of the other cylinder housing (45, 46) having an identical capacity by means of a throttling line (47).

9. Device according to claim 8, **characterised in that** two respective chambers (50, 51; 51, 54) of two piston/cylinder units (52, 53) having an identical capacity are connected together by means of a throttling line (47).

## Revendications

1. Dispositif (1) pour monter une machine agricole (20) ou un appareil sur un support (2) fixé à l'arrière ou à l'avant d'un véhicule tracteur et auquel la machine (20) est reliée de manière amovible au moyen d'une barre d'attelage (21), la machine pouvant être déplacée en étant, au choix, dans une position de transport ou de non utilisation dans laquelle la machine (20) est immobilisée latéralement et soulevée du sol par un dispositif de verrouillage (18), ou dans une position de travail dans laquelle la machine (20) est libérée du dispositif de verrouillage (18) et peut rouler sur le sol en pivotant latéralement de façon limitée, et comprenant un dispositif stabilisateur (27) reliant au moins d'un côté le support (2) et le bâti de la machine, qui amortit les déplacements latéraux de la machine (20), **caractérisé en ce que** le support (2) et le bâti de la machine sont reliés par un dispositif stabilisateur (27) composé d'un piston (29) et d'un boîtier cylindrique (30) d'une unité piston/cylindre hydraulique ou pneumatique (31), les chambres (32, 33, 48, 49, 50, 51) du boîtier cylindrique (30, 45, 46) formées par le piston (29) de l'unité piston/cylindre (31) étant reliées par un tuyau à étranglement (34, 39, 47).

2. Dispositif selon la revendication 1, **caractérisé en ce qu'**un boîtier cylindrique (30) présente deux chambres (32, 33) disposées l'une derrière l'autre, qui sont séparées par un piston (29) traversant lesdites chambres (32, 33) et relié à une tige de piston (35).

3. Dispositif selon la revendication 2, **caractérisé en ce que** le piston (29) présente en tant que tuyau à étranglement (34) un perçage reliant les chambres (32, 33) à l'intérieur du boîtier cylindrique (30).

4. Dispositif selon la revendication 1 ou 2, **caractérisé en ce que** les chambres (32, 33) sont reliées par un tuyau à étranglement (39) placé à l'extérieur du boîtier cylindrique (30).

5. Dispositif selon la revendication 4, **caractérisé en ce que** le tuyau à étranglement (39) présente un étranglement réglable (40).

6. Dispositif selon l'une des revendications 1 à 5, **caractérisé en ce que** les chambres communicantes (32, 33) présentent approximativement le même contenu lorsque le piston a effectué sa coure maximale.

7. Dispositif selon l'une des revendications 1 à 6, **caractérisé en ce que** de part et d'autre de la barre d'attelage (21), une unité piston/cylindre (31) est chaque fois accouplée par ses extrémités respectivement au support (2) et au bâti de la machine, et **en ce que** les chambres (47, 48) formées par le piston (29) et le boîtier cylindrique (30) d'une unité piston/cylindre (31) sont reliées par un tuyau à étranglement (47).

8. Dispositif selon la revendication 7, **caractérisé en ce que** les boîtiers cylindriques (45, 46) présentent chacun deux chambres (50, 54 ; 51, 55) séparées par un piston (56, 57), dont au moins une est reliée à la chambre (50, 54 ; 51, 55) de même contenance de l'autre boîtier cylindrique (45, 46) par un tuyau à étranglement (47).

9. Dispositif selon la revendication 8, **caractérisé en ce que** deux chambres de même contenance (50, 51 ; 54, 55) de deux unités piston/cylindre (52, 53) sont chaque fois reliées entre elles par un tuyau à étranglement (47).
